# EUROPÄISCHE PATENTANMELDUNG

(11) **EP 3 902 229 A1**
(43) Veröffentlichungstag der Anmeldung: **27.10.2021**
(21) Anmeldenummer: 20171359.1
(22) Anmeldetag: 24.04.2020
(51) Int. Cl.: H04L 29/08, H04L 12/24, H04W 84/18

(54) **VERFAHREN ZUR BEREITSTELLUNG VON COMPUTERRESSOURCEN, NETZWERKFÄHIGE KOMPONENTE, COMPUTERPROGRAMM UND ELEKTRONISCH LESBARER DATENTRÄGER**

(71) Anmelder: Siemens Aktiengesellschaft, 80333 München (DE)
(72) Erfinder: Sauer, Markus, 81739 München (DE); Zeiger, Florian, 85635 Höhenkirchen-Siegertsbrunn (DE)

(57) **Zusammenfassung**

Bei dem Verfahren zur Bereitstellung von Computerressourcen eines Computernetzwerks an zumindest eine Recheneinrichtung, bei welchem zumindest zwei netzwerkfähige Komponenten mit Computerressourcen herangezogen werden, welche relativ zur Recheneinrichtung beweglich sind, wobei zumindest ein Bedarfswert der Recheneinrichtung an Computerressourcen erfasst wird, zumindest eine Verfügbarkeit der netzwerkfähigen Komponenten ermittelt wird und zumindest zwei oder mehrere der netzwerkfähigen Komponenten mit einer ermittelten bestehenden Verfügbarkeit einem Computernetzwerk zugeordnet werden und zumindest eine netzwerkfähige Komponente als Administrationsschnittstelle zwischen Computernetzwerk und Recheneinrichtung bereitgestellt wird, wobei zumindest der Bedarfswert an Computerressourcen des Computernetzwerts bereitgestellt wird.

Die Netzwerkfähige Komponente ist als Administrationskomponente ausgebildet zur Ausführung eines solchen Verfahrens.

Das Computerprogramm ist direkt in einen Speicher einer elektronischen Recheneinrichtung ladbar und weist Programm-Mittel auf, um die Schritte eines solchen Verfahrens auszuführen, wenn das Programm in einer Recheneinrichtung ausgeführt wird.

Der elektronisch lesbare Datenträger weist darauf gespeicherte elektronisch lesbare Steuerinformationen auf, welche zumindest ein solches Computerprogrammumfassen und derart ausgestaltet sind, dass sie bei Verwendung des Datenträgers in einer elektronischen Recheneinrichtung ein solches Verfahren durchführen.

## Beschreibung

Verfahren zur Bereitstellung von Computerressourcen, netzwerkfähige Komponente, Computerprogramm und elektronisch lesbarer Datenträger

Die Erfindung betrifft ein Verfahren zur Bereitstellung von Computerressourcen eines Computernetzwerks an zumindest eine Recheneinrichtung sowie eine netzwerkfähige Komponente und ein Computerprogramm sowie einen elektronisch lesbaren Datenträger.

Das Internet-of-Things (IoT, häufig auch als "Internet der Dinge" bezeichnet) dringt fortwährend in neuartige Bereiche vor. Solche neuartigen Bereiche stellen neue Anforderungen sowohl an die Rechenleistung als auch an die Funktionsweise von IoT-Lösungen. Besonders anspruchsvoll sind solche Anforderungen in räumlichen Gebieten sowie in Anwendungsbereichen, in welchen bislang gar keine Kommunikations- und Recheninfrastruktur verfügbar ist. Solche Anwendungsbereiche und räumliche Gebiete stellen beispielsweise die Landwirtschaft, das Mining, die Seefahrt, Bauumgebungen und der Weltraum dar. Eine weitere Herausforderung besteht in Anwendungsbereichen, welche Kommunikations- und Rechenressourcen nicht dauerhaft, sondern räumlich und zeitlich lokalisiert erfordern. Solche Anwendungsbereiche schließen beispielsweise die Datenanalyse sowie den Einsatz künstlicher Intelligenz ein. Für solche Anwendungen ist Infrastruktur regelmäßig nicht vorhanden, da aufgrund der räumlichen und zeitlich sehr begrenzten Kommunikations- und Rechenerfordernisse der Aufbau einer solchen Infrastruktur regelmäßig nicht wirtschaftlich ist. Insbesondere Hochgeschwindigkeits-Links ins Internet stehen in solchen Nischenanwendungen häufig nicht zur Verfügung. Datenintensive Aufgaben können daher in solchen Anwendungsbereichen nicht cloud-unterstützt gelöst werden, sodass bekannte Lösungen, wie sie in infrastrukturreichen Umgebungen wie der Industrie 4.0 eingesetzt werden, nicht übertragbar sind.

Vor diesem Hintergrund ist es daher Aufgabe der Erfindung, ein Verfahren zur Bereitstellung von Computerressourcen eines Computernetzwerks an zumindest eine Recheneinrichtung anzugeben, mittels welchem Computerressourcen eines Computernetzwerks auch in solchen räumlichen Gebieten und/oder Anwendungsbereichen bereitgestellt werden können, in welchen eine solche Rechen- und Kommunikationsinfrastruktur nicht oder nicht dauerhaft besteht. Ferner ist es Aufgabe der Erfindung, eine netzwerkfähige Komponente anzugeben, mittels welcher ein solches Verfahren ausführbar ist. Zudem ist es Aufgabe der Erfindung, ein Computerprogramm sowie einen elektronisch lesbaren Datenträger zur Ausführung des erfindungsgemäßen Verfahrens anzugeben.

Diese Aufgabe der Erfindung wird mittels eines Verfahrens zur Bereitstellung von Computerressourcen eines Computernetzwerks an zumindest eine Recheneinrichtung mit den in Anspruch 1 angegebenen Merkmalen und mit einer netzwerkfähigen Komponente mit den in Anspruch 13 angegebenen Merkmalen sowie mit einem Computerprogramm mit den in Anspruch 14 angegebenen Merkmalen und mit einem elektronisch lesbaren Datenträger mit den in Anspruch 15 angegebenen Merkmalen gelöst. Bevorzugte Weiterbildungen der Erfindung sind in den zugehörigen Unteransprüchen, der nachfolgenden Beschreibung und der Zeichnung angegeben.

Bei dem erfindungsgemäßen Verfahren zur Bereitstellung von Computerressourcen eines Computernetzwerks an zumindest eine Recheneinrichtung werden zumindest zwei netzwerkfähige Komponenten mit Computerressourcen herangezogen, welche relativ zur Recheneinrichtung beweglich sind. Bei dem erfindungsgemäßen Verfahren wird zumindest ein Bedarfswert der Recheneinrichtung an Computerressourcen erfasst und zumindest eine Verfügbarkeit der netzwerkfähigen Komponenten ermittelt. Bei dem erfindungsgemäßen Verfahren werden zumindest zwei oder mehrere der netzwerkfähigen Komponenten mit einer ermittelten bestehenden Verfügbarkeit einem Computernetzwerk zugeordnet und es wird zumindest eine netzwerkfähige Komponente als Administrationsschnittstelle zwischen Computernetzwerk und Recheneinrichtung bereitgestellt, wobei zumindest der Bedarfswert an Computerressourcen des Computernetzwerts bereitgestellt wird.

Mittels des erfindungsgemäßen Verfahrens können Computerressourcen eines Netzwerks mobiler netzwerkfähiger Komponenten für eine Recheneinrichtung nutzbar gemacht werden.

Vorteilhaft werden bei dem Verfahren gemäß der Erfindung Computerressourcen der netzwerkfähigen Komponenten des Computernetzwerks bereitstellt.

Insbesondere können Computerressourcen der netzwerkfähigen Komponenten unabhängig von einer individuellen Trajektorie der netzwerkfähigen Komponenten relativ zur Recheneinrichtung durch diese Komponenten an die Recheneinrichtung bereitgestellt werden, da zumindest eine der netzwerkfähigen Komponenten als Administrationsschnittstelle zwischen Computernetzwerk und Recheneinrichtung fungiert. Unabhängig von der individuellen Trajektorie der netzwerkfähigen Komponenten kann die zumindest eine Administrationsschnittstelle die Computerressourcen des Computernetzwerks der Recheneinrichtung zuordnen, sodass ein mit dem Bedarfswert formulierter Bedarf der Recheneinrichtung an Computerressourcen wirksam gedeckt werden kann.

Unter einer Administrationsschnittstelle im Sinne dieser Erfindung wird zweckmäßig eine Schnittstelle zwischen Computernetzwerk und Recheneinrichtung verstanden, welche die Computerressourcen des Computernetzwerks der Recheneinrichtung zuordnet und diese Zuordnung verwaltet, d.h. administriert.

Es versteht sich, dass bei dem erfindungsgemäßen Verfahren auch mehr als eine Administrationsschnittstelle zwischen Computernetzwerk und Recheneinrichtung bereitgestellt werden können. So können bei dem erfindungsgemäßen Verfahren mit zwei oder mehreren Administrationsschnittstellen die Computerressourcen des Computernetzwerks mittels verteilter Administrationsschnittstellen der Recheneinrichtung zugeordnet werden. Dies ermöglicht zudem vorteilhaft eine redundante Bereitstellung der Administrationsschnittstelle und folglich eine besonders ausfallsichere Ausführung des erfindungsgemäßen Verfahrens.

Unter einer beweglichen Komponente wird eine mobile, d.h. zur Bewegung ausgebildete und eingerichtete, Komponente verstanden, also eine Komponente, welche insbesondere Flugmittel, vorzugsweise Tragflächen oder Steuerdüsen, insbesondere für eine definierte Flugbahn, oder Schwimmmittel aufweist. Alternativ oder zusätzlich ist oder sind eine oder mehrere oder sämtliche der netzwerkfähigen Komponenten zur Bewegung in einer Erdumlaufbahn, vorzugsweise mittels passiver Bahn- und/oder Lageregelung, eingerichtet und ausgebildet. Eine solche Erdumlaufbahn kann eine fixe Erdumlaufbahn oder eine dynamisch veränderliche, insbesondere beinflussbare, Erdumlaufbahn sein. Dabei ist die Komponente nicht notwendigerweise aktiv beweglich. Eine passiv bewegliche Komponente soll ebenfalls als bewegliche Komponente im Sinne dieser Erfindung zu verstehen sein. Zudem können unter beweglichen Komponenten auch bodengebunden bewegliche Komponenten verstanden werden, welche als Landfahrzeuge, insbesondere als Roboterfahrzeuge oder als Standardfahrzeuge, vorzugsweise Automobile und/oder Lastkraftwagen und/oder Arbeitsmaschinen ausgebildet sind.

Der Bedarfswert im Sinne dieser Erfindung stellt zweckmäßig eine Anforderung der Recheneinrichtung an Computerressourcen dar.

Die zumindest eine Administrationsschnittstelle ermöglicht vorteilhaft die Bereitstellung von Computerressourcen dynamisch, d.h. temporär und/oder zeitabhängig, in einem bestimmten räumlichen Gebiet. Somit können mittels des erfindungsgemäßen Verfahrens Computerressourcen auch in Anwendungsbereichen oder räumlichen Gebieten an Recheneinrichtungen bereitgestellt werden, in welchen eine ansonsten erforderliche Kommunikations- und Rechenstruktur nicht besteht. Folglich sind Recheneinrichtungen mittels des erfindungsgemäßen Verfahrens mit gängigen Anforderungen der Industrie 4.0 einsetzbar, insbesondere mit geringen Kommunikationslaufzeiten mit einem Minimum an definierten Ressourcenzuteilungen.
Vorzugsweise wird bei dem erfindungsgemäßen Verfahren der Bedarfswert der Recheneinrichtung von der zumindest einen Administrationsschnittstelle erfasst. Zudem wird geeignet die Verfügbarkeit der netzwerkfähigen Komponenten mittels der, besonders bevorzugt durch die, zumindest eine/n Administrationsschnittstelle ermittelt. Vorzugsweise werden die zwei oder die mehreren netzwerkfähigen Komponenten mit einer ermittelten Verfügbarkeit von der zumindest einen Administrationsschnittstelle dem Computernetzwerk zugeordnet. Besonders geeignet wird zumindest der Bedarfswert an Computerressourcen des Computernetzwerts mittels der oder durch die zumindest eine Administrationsschnittstelle bereitgestellt.

In dieser Weiterbildung der Erfindung wird die Zuordnung weitgehend autonom von der zumindest einen Administrationsschnittstelle übernommen, sodass die Recheneinrichtung mittels des erfindungsgemäßen Verfahrens mit einem Computernetzwerk-as-a-service versorgt werden kann. Vorteilhafterweise müssen nicht sämtliche netzwerkfähigen Komponenten notwendigerweise als Administrationsschnittstelle fungieren.

Mittels des erfindungsgemäßen Verfahrens kann vorteilhaft mittels relativ zur Recheneinrichtung beweglicher netzwerkfähiger Komponenten und vorzugsweise dezentral eine dynamisch zuordbare private Edge-Cloud geschaffen werden. Insbesondere ist mittels des erfindungsgemäßen Verfahrens eine zentrale Verwaltung von Computerressourcen nicht erforderlich. Vielmehr könne mittels des erfindungsgemäßen Verfahrens Computerressourcen dann genutzt werden, sobald diese zur Verfügung stehen.

Vorteilhaft bilden die netzwerkfähigen Komponenten einen Pool von Computerressourcen für ein spezifisches geographisches Gebiet.

In dieser Weiterbildung des erfindungsgemäßen Verfahrens bildet die zumindest eine Administrationsschnittstelle folglich einen dynamischen virtuellen Cloudcontroller, welcher eine Schnittstelle für einen Nutzer aufweist, um Anwendungen mittels des Computernetzwerks ausführen zu lassen und mittels des Computernetzwerks Kommunikations- und Rechenaufgaben durchführen zu lassen. Dabei bedeutet "virtuell" "durch eine dynamisch anordbare und ausführbare Softwarekomponente realisiert."

Vorzugsweise werden bei dem erfindungsgemäßen Verfahren die zumindest zwei oder mehreren netzwerkfähigen Komponenten abhängig von dem Bedarfswert dem Computernetzwerk zugeordnet. Besonders bevorzugt werden die netzwerkfähigen Komponenten fortlaufend abhängig von dem Bedarfswert dem Computernetzwerk zugeordnet.

Vorteilhaft können mittels des erfindungsgemäßen Verfahrens die Computerressourcen fortlaufend an die Verfügbarkeit der netzwerkfähigen Komponenten oder an Änderungen des Bedarfswerts an Computerressourcen, etwa hinsichtlich des Energieverbrauchs, angepasst werden. Insbesondere können abhängig vom Bedarfswert mehr netzwerkfähige Komponenten zur Bereitstellung der Computerressourcen herangezogen werden oder aus dem Computernetzwerk entfernt werden. Folglich kann mittels des erfindungsgemäßen Verfahrens das Computernetzwerk angepasst an den Bedarfswert hochskaliert oder herabskaliert werden.

Zweckmäßig wird bei dem erfindungsgemäßen Verfahren die Verfügbarkeit der zumindest zwei netzwerkfähigen Komponenten ermittelt, indem den zumindest zwei netzwerkfähigen Komponenten der Bedarfswert der Recheneinrichtung mitgeteilt wird und, insbesondere von diesen zumindest zwei netzwerkfähigen Komponenten, eine Verfügbarkeit zumindest je einer oder mehrerer der netzwerkfähigen Komponenten, vorzugsweise abhängig von einer Bewegung relativ zur Recheneinrichtung und/oder anhand einer Auslastung im Übrigen, vorzugsweise seitens der zumindest einen Administrationsschnittstelle, erhalten.

Vorteilhaft erfordert das erfindungsgemäße Verfahren keine zentrale Kenntnis über die räumlichen Trajektorien von netzwerkfähigen Komponenten. Vielmehr können die netzwerkfähigen Komponenten ihre Verfügbarkeit für die Recheneinrichtung aus ihren räumlichen Trajektorien vorzugsweise selbstständig und dezentral bestimmen und an die zumindest eine Administrationsschnittstelle übermitteln. Auf diese Weise adressiert das erfindungsgemäße Verfahren zum einen gegebenenfalls bestehende Vertraulichkeitsanforderungen, da lediglich die Verfügbarkeit von netzwerkfähigen Komponenten an die zumindest eine Administrationsschnittstelle übermittelt werden muss und nicht die Trajektorie selbst. Zum anderen und ebenfalls vorteilhaft muss die Verfügbarkeit nicht bei der Recheneinrichtung selbst bestimmt werden, sodass die Recheneinrichtung die verfügbaren Computerressourcen ohne weitere Abstriche zugewiesen erhält. Die Computerressourcen stehen der Recheneinrichtung also vollständig zur Verfügung, ohne dass ein Teil der Computerressourcen zur Administration des Computernetzwerks aufgewendet werden muss.

Geeigneterweise bildet bei dem erfindungsgemäßen Verfahren die zumindest eine Recheneinrichtung ein Edge-Device. Die zumindest eine Recheneinrichtung kommuniziert in dieser Weiterbildung der Erfindung vorzugsweise mit den netzwerkfähigen Komponenten als Cloud, d.h. die zumindest zwei netzwerkfähigen Komponenten bilden vorzugsweise ein Computernetzwerk in Gestalt eines Cloudnetzwerks.

Bevorzugt sind bei dem erfindungsgemäßen Verfahren die zumindest zwei netzwerkfähigen Komponenten fahrfähig, insbesondere landfahrfähig und/oder luftfahrfähig und/oder seefahrfähig. Vorzugsweise sind die oder zumindest eine oder mehrere der zumindest zwei relativ zur Recheneinrichtung beweglichen netzwerkfähigen Komponenten bei dem erfindungsgemäßen Verfahren mit Satelliten und/oder fliegenden oder und/oder schwimmenden und/oder fahrenden Komponenten gebildet. Alternativ oder zusätzlich können mindestens eine oder mehrere oder sämtliche der beweglichen zumindest zwei netzwerkfähigen Komponenten flugfähig und/oder schwimmfähig ausgebildet sein.

Bei dem Verfahren gemäß der Erfindung wird dann, wenn die Verfügbarkeit einer scheidenden netzwerkfähigen Komponente der zumindest zwei netzwerkfähigen Komponenten des Computernetzwerks endet, vorzugsweise mittels der zumindest einen Administrationsschnittstelle, ein Ende der Verfügbarkeit erfasst. Auf diese Weise kann das Computernetzwerk auf das Ende der Verfügbarkeit der scheidenden netzwerkfähigen Komponente reagieren und zeitnah weitere Computerressourcen zur Kompensation der scheidenden netzwerkfähigen Komponente ersetzen.

In einer vorteilhaften Weiterbildung des erfindungsgemäßen Verfahrens wird abhängig vom des Bedarfswerts und/oder von Computerressourcen der scheidenden Komponente die Abnahme von Computerressourcen, vorzugsweise mittels der zumindest einen Administrationsschnittstelle, an die übrigen netzwerkfähigen Komponenten ausgeschrieben. In dieser Weiterbildung der Erfindung kann der auf eine scheidende netzwerkfähige Komponente anfallende Anteil von Computerressourcen leicht durch übrige der netzwerkfähigen Komponenten ersetzt werden.

Bei dem Verfahren gemäß der Erfindung wird zweckmäßig dann, wenn die Verfügbarkeit, insbesondere aufgrund einer Bewegung, der zumindest einen Administrationsschnittstelle oder zumindest einer der Administrationsschnittstellen zwischen Computernetzwerk und Recheneinrichtung endet, mittels der zumindest einen Administrationsschnittstelle die Bereitstellung als zumindest eine Administrationsschnittstelle an die übrigen der zumindest zwei netzwerkfähigen Komponenten ausgeschrieben. In dieser Weiterbildung der Erfindung kann die Rolle der mindestens einen Administrationsschnittstelle leicht durch mindestens eine übrige der zumindest zwei netzwerkfähigen Komponenten ersetzt werden.

Vorzugsweise wird bei dem erfindungsgemäßen Verfahren diejenige oder diejenigen der netzwerkfähigen Komponenten, welche aktuell als Administrationsschnittstelle bereitgestellt wird oder werden, nachfolgend nicht weiter als Administrationsschnittstelle bereitgestellt. Auf diese Weise kann oder können die vorhergehende Administrationsschnittstelle oder - schnittstellen einfach aus dem Computernetzwerk ausscheiden.

Geeigneterweise wird bei dem erfindungsgemäßen Verfahren ein Bedarfswert der zumindest einen Recheneinrichtung an Computerressourcen wiederholt erfasst und abhängig von dem wiederholt erfassten Bedarfswert wird mindestens eine weitere netzwerkfähige Komponente dem Computernetzwerk zugefügt und/oder eine netzwerkfähige Komponente aus dem Computernetzwerk entfernt. Insbesondere werden, falls die Computerressourcen des Computernetzwerks zur Bereitstellung des Bedarfswerts nicht ausreichen, eine oder mehrere weitere relativ zur Recheneinrichtung bewegliche netzwerkfähige Komponenten derart in die geographische Umgebung der Recheneinrichtung bewegt, dass die weiteren netzwerkfähigen Komponenten Verfügbarkeit mitteilen können und zur Bereitstellung des Bedarfswerts beitragen können.

Vorteilhaft kann in dieser Weiterbildung der Erfindung die zumindest eine Administrationsschnittstelle einen Engpass von Computerressourcen durch die netzwerkfähigen Komponenten erfassen und eine Anfrage nach zusätzlichen Ressourcen initiieren. Insbesondere können mittels Pseudo-Satelliten und/oder Drohnen zusätzliche Ressourcen bereitgestellt werden, um kurzfristig auf einen geänderten Bedarfswert zu reagieren.

Bevorzugt wird bei dem erfindungsgemäßen Verfahren die Zuordnung von Computerressourcen und/oder der Bedarfswert an Computerressourcen zeitabhängig beobachtet und mittels eines Steuerparameters beeinflusst. Der Steuerparameter kann insbesondere ein zur Beeinflussung des Bedarfswerts oder der Zuordnung festgesetzter Preis sein. Der Preis kann insbesondere mittels mindestens eines Smart Contracts ausgehandelt oder festgesetzt sein, wobei der mindestens eine Smart Contract vorzugsweise mittels einer Blockchain realisiert wird.

Die erfindungsgemäße netzwerkfähige Komponente ist insbesondere als Administrationskomponente zur Ausführung eines erfindungsgemäßen Verfahrens wie vorhergehend beschrieben ausgebildet.

Das erfindungsgemäße Computerprogramm ist direkt in einen Speicher einer elektronischen Recheneinrichtung ladbar und weist Programm-Mittel auf, um die Schritte des erfindungsgemäßen Verfahrens wie vorhergehend beschrieben auszuführen, wenn das Programm in einer Recheneinrichtung ausgeführt wird.

Der erfindungsgemäße elektronisch lesbarer Datenträger weist auf dem Datenträger gespeicherte elektronisch lesbare Steuerinformationen auf, welche zumindest ein erfindungsgemäßes Computerprogramm wie vorhergehend beschrieben umfassen und derart ausgestaltet sind, dass sie bei Verwendung des Datenträgers in einer elektronischen Recheneinrichtung ein erfindungsgemäßes Verfahren wie vorhergehend beschrieben durchführen.

Der erfindungsgemäße elektronisch lesbare Datenträger ist insbesondere ein elektronisch lesbarer Datenträger in Form einer Festplatte, vorzugsweise eines USB-Sticks, oder in Form einer Diskette wie vorzugsweise eine DVD oder eine CD oder eine Blueray-Disk, oder in Form eines Online-Speichers, vorzugsweise eines Cloudnetzwerks.

Nachfolgend wird die Erfindung anhand eines in der Zeichnung dargestellten Ausführungsbeispiels näher erläutert.

Es zeigen:
- Fig. 1: ein Computernetzwerk, welches mittels eines erfindungsgemäßen Verfahrens Computerressourcen an zumindest eine Recheneinrichtung bereitstellt, schematisch in einer Prinzipskizze,
- Fig. 2: beispielhaft eine Kommunikation in dem Computernetzwerk zur Bereitstellung eines aktualisierten Bedarfswertes an Computerressourcen der Recheneinrichtung sowie

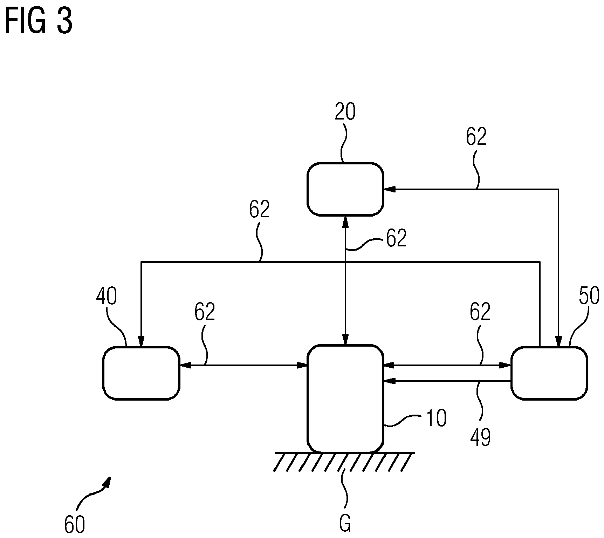

- Fig. 3: beispielhaft eine weitere Kommunikation in dem Computernetzwerk zur Bereitstellung eines aktualisierten Bedarfswertes an Computerressourcen der Recheneinrichtung.

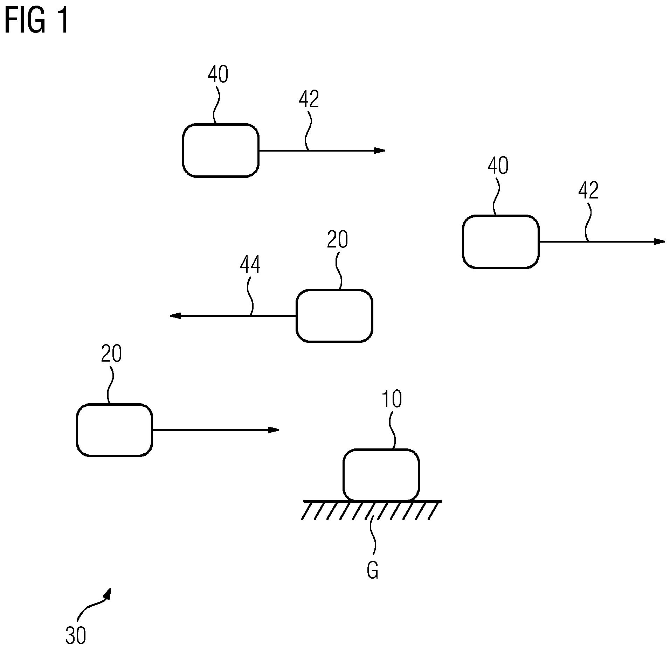

Die in Fig. 1 dargestellte Recheneinrichtung ist eine mobile Agrarmaschine 10 in Gestalt einer Pflugmaschine, welche anhand von mobil erfassten Agrardaten verfahren und hinsichtlich der mechanischen Pflugfunktionen gesteuert wird. Dazu empfängt die mobile Agrarmaschine 10 zum einen optische Sensordaten von Sensorknoten 20 eines mobilen Cloudnetzwerks 30. Zum anderen nutzt die mobile Agrarmaschine 10 Rechenressourcen des mobilen Cloudnetzwerks 30, indem die mobile Agrarmaschine 10 komplexere Rechnungen eines Verfahrsteueralgorithmus zum Verfahren der mobilen Agrarmaschine 10 sowie komplexere Rechnungen eines Pflugsteueralgorithmus zur Steuerung der mechanischen Pflugfunktionen an Rechenknoten 40 des mobilen Cloudnetzwerks 30 auslagert. Folglich stellen die Sensorknoten 20 Computerressourcen in Form von Sensorressourcen bereit, während die Rechenknoten 40 Computerressourcen in Form von Rechenressourcen bereitstellen.

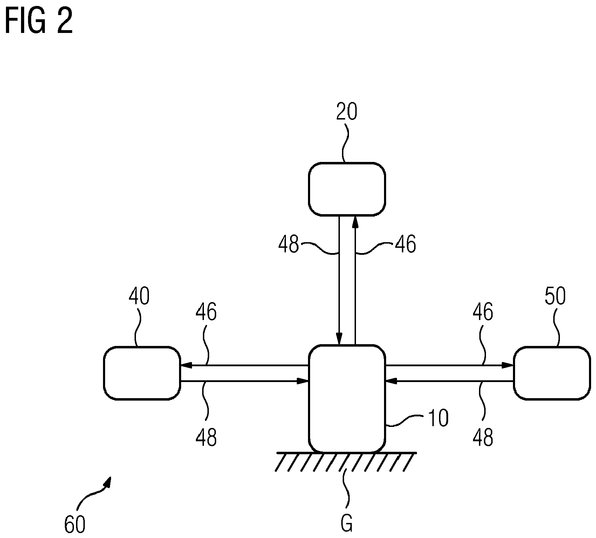

Das mobile Cloudnetzwerk 30 setzt sich aus solchen Sensorknoten 20 sowie solchen Rechenknoten 40, zusammenfassend im Folgenden auch vereinfachend lediglich als Knoten 20, 40 bezeichnet, zusammen. Die Knoten 20, 40 sind mittels Satelliten und/oder Luft- oder Landfahrzeugen oder Trailern gebildet und bilden bewegliche netzwerkfähige Komponenten im Sinne dieser Erfindung, welche sich in Richtungen 42, 44 bewegen. Die Knoten 20, 40 bewegen sich dabei relativ zur Agrarmaschine 10 mit einer deutlich höheren Geschwindigkeit als die Agrarmaschine 10 relativ zum Erdboden G. Daher ist die Agrarmaschine 10 schematisch als ortsfest gegenüber dem Erdboden G dargestellt. Dabei sind die Knoten 20, 40 der mobilen Agrarmaschine 10 nicht sämtlich dauerhaft zugeordnet, sondern lediglich einige der Knoten 20, 40 stellen ihre Sensor- und Rechenressourcen temporär und bedarfsabhängig der mobilen Agrarmaschine 10 zur Verfügung. Dies erfolgt mittels des erfindungsgemäßen Verfahrens zur Bereitstellung von Computerressourcen des Cloudnetzwerks 30 wie folgt:
In einem ersten Szenario wird die Bereitstellung der Computerressourcen gestartet und mittels des mobilen Cloudnetzwerks 30 eine virtuelles Kommunikations- und Rechenumgebung wie in Fig. 2 dargestellt realisiert:
Dazu sendet die mobile Agrarmaschine 10 dann, wenn diese einen Bedarf an Computerressourcen feststellt, welcher etwa die begrenzten Rechenressourcen der mobilen Agrarmaschine 10 überschreitet und welcher einen Bedarf an Sensorressourcen bedeutet, eine Anfrage nach den erforderlichen Computerressourcen mittels einer Multicast-/Broadcast-Nachricht 46 an alle Knoten 20, 40 des Cloudnetzwerks 30. Die Multicast-/Broadcast-Nachricht 46 nach den erforderlichen Rechenressourcen enthält dabei das geographische Gebiet, die zu erfüllenden Kommunikationserfordernisse, den Zeitrahmen, innerhalb welchen die Rechenressourcen zur Verfügung gestellt werden müssen sowie die sonstige zur Heranziehung der Computerressource erforderlichen Parameter.

Die Knoten 20, 40 des mobilen Cloudnetzwerks 30 bestimmen anhand ihrer relativen Bewegung und ihrer Kommunikationserfordernisse jeweils ein Kommunikationszeitfenster für eine Kommunikation mit der mobilen Agrarmaschine 10, entlang welcher die Knoten 20, 40 jeweils mit der mobilen Agrarmaschine 10 kommunizieren können. Zudem bestimmen die Knoten 20, 40 anhand ihrer sonstigen vorgesehenen Aufgaben, welche Rechenleistung gemäß den angefragten Parametern während des Kommunikationszeitfensters der mobilen Agrarmaschine 10 zur Verfügung stellen könnten.

Abhängig von diesem bestimmten Kommunikationszeitfenster und den bestimmten verfügbaren Computerressourcen bieten die Knoten 20, 40 des mobilen Cloudnetzwerks 30 ihre Computerressourcen an die mobile Agrarmaschine 10 als Angebote mittels einer Angebotsnachricht 48 an.

Die mobile Agrarmaschine 10 sammelt diese Angebote von Computerressourcen für eine bestimmte Zeitdauer, hier einer vorab festgelegten Angebotsdauer, und wertet aus, ob ihr Bedarf an Rechenressourcen in den jeweiligen Kommunikationszeitfenstern gedeckt werden kann. Soweit dies der Fall ist, weist die mobile Agrarmaschine 10 einem der Knoten 20, 40 die Rolle eines dynamischen virtuellen Cloudcontrollers 50 zu. Zweckmäßig wird dabei derjenige Knoten 20, 40 gewählt, welcher das längste Kommunikationszeitfenster mit der mobilen Agrarmaschine 10 aufweist.

Der dynamische virtuelle Cloudcontroller 50 richtet eine neue dynamische virtuelle Kommunikations- und Rechenumgebung 60 als sogenannte Edge-Cloud mit den anderen verfügbaren Knoten 20, 40 des mobilen Cloudnetzwerks 30 für die mobile Agrarmaschine 10 ein. Dazu wird zunächst ein virtuelles Netzwerk zwischen den teilnehmenden Knoten 20, 40 des mobilen Cloudnetzwerks 30 und der mobilen Agrarmaschine 10 eingerichtet und nachfolgend eine Ressourcen-Zuordnungs-Strategie (etwa eine zentrale Planung oder eine dezentrale Aufgabenzuweisung) basierend auf der Kommunikationsverfügbarkeit der Knoten 20, 40 sowie auf der Verfügbarkeit von deren Computerressourcen formuliert und die mobile Agrarmaschine 10 über die Verfügbarkeit der virtuellen Kommunikations- und Rechenumgebung 60 mittels einer Ressourceninformationsnachricht 49 informiert. Der dynamische virtuelle Cloudcontroller 50 initialisiert einen Satz von Konfigurationsvariablen, wie insbesondere den Ort, an welchem der vorläufige dynamische virtuelle Cloudcontroller 50 aktiv ist, die Ressourcen-Zuordnung entsprechend der Ressourcen-Zuordnungs-Strategie, insbesondere hinsichtlich einer Rechenleistung und einer Sensorleistung sowie hinsichtlich eines Speicherbedarfs und hinsichtlich eines Kommunikationsbedarfs und der geplanten Betriebsdauer, für welche die Ressourcen jeweils zugeordnet werden sollen. Ferner umfassen die Konfigurationsvariablen eine Aufstellung der gegenwärtig zugeordneten oder genutzten Computerressourcen sowie eine Aufstellung der verfügbaren Computerressourcen, welche gegenwärtig nicht genutzt werden, aber künftig genutzt werden können sowie optional Beschränkungen, welche berücksichtigt werden müssen, etwa Aufgaben, welche, etwa aus Sicherheits- oder Zertifizierungsgründen, nicht auf bestimmter Hardware laufen dürfen.

Sobald die virtuelle Kommunikations- und Rechenumgebung 60 initialisiert ist, kann der dynamische virtuelle Cloudcontroller 50 nutzer-spezifische Authentisierungsmethoden (etwa zertifikatsbasierte Authentisierung) virtueller Ressourcen auf den Knoten 20, 40 (beispielsweise virtuelle Netzwerke, Netzwerk-namensräume oder Rechen-Namensräume) einrichten. Zusätzlich und optional können auch AAA auf Anwendungsebene implementiert werden mit Rollendefinitionen von Nutzern, Anwendungen, Aufgaben, etc. In der virtuellen Kommunikations- und Rechenumgebung 60 kommunizieren die netzwerkfähigen Komponenten 20, 40 sowie die Recheneinrichtung 50 und der dynamische virtuelle Cloudcontroller 50 mittels Netzwerknachrichten 62. Der dynamische virtuelle Cloudcontroller 50 verwaltet seine Ressourcen-Aufstellung und die Liste der verfügbaren Computerressourcen.

Die mobile Agrarmaschine 10 sendet nachfolgend ihre Rechenaufgaben an ihre private Edge-Computing Cloud. Daraufhin planen die jeweils zugeordneten Knoten 20, 40 der virtuellen Kommunikations- und Rechenumgebung ihre Rechenaufgaben.

Die zugeordneten Konten 20, 40 der virtuellen Kommunikations- und Rechenumgebung führen ihre Rechenaufgaben aus und senden ihre Ergebnisse an die mobile Agrarmaschine 10 zurück. In weiteren Ausführungsbeispielen können die netzwerkfähigen Komponenten 20, 40 durch Dritte bereitgestellt und in das Cloudnetzwerk 30 eingebunden werden.

In weiteren, nicht eigens dargestellten Ausführungsbeispielen ist die Recheneinrichtung selbst beweglich, beispielsweise ein Konstruktionsseefahrzeug auf hoher See, welches sich langsam bewegt. Der dynamische virtuelle Cloudcontroller 50 befindet sich oberhalb der Konstruktionsseefahrzeuge und ist beispielsweise als Drohne realisiert und bewegt sich mit diesem mit. Der dynamische virtuelle Cloudcontroller 50 stellt sicher, dass sein Ort sowie die Liste der Ressourcen und die Ressourcen-Aufstellung fortwährend aktualisiert werden. Nachfolgend wird ein zweites Szenario beschrieben, bei welchem ein Hand-Over beim Ausscheiden einer netzwerkfähigen Komponente 20, 40 erfolgt. Im beschriebenen Ausführungsbeispiel wird eine netzwerkfähige Komponente 20, 40 zugefügt und eine netzwerkfähige Komponente 20, 40 entfernt.

Dabei stellt zunächst eine erste netzwerkfähige Komponente 40 fest, dass sie künftig das Kommunikationsfenster eines bestimmten räumlichen Gebiets, in welchem die virtuelle Kommunikations- und Rechenumgebung 60 besteht und in welchem sich die Agrarmaschine 10 befindet, verlässt.

Daher sendet die erste netzwerkfähige Komponente 40 mittels einer Netzwerknachricht 62 eine Nachricht an den vorläufigen dynamischen virtuellen Cloudcontroller 50, welche die Zeitspanne enthält, innerhalb derer die erste netzwerkfähige Komponente noch in dem Kommunikationsfenster verweilt. Der vorläufige dynamische virtuelle Cloudcontroller 50 sendet eine Anfrage der demzufolge zu ersetzenden Computerressourcen an das mobile Cloudnetzwerk 30 mittels einer Netzwerknachricht 62. Alternativ kann in einem weiteren, nicht eigens dargestellten Ausführungsbeispiel die erste netzwerkfähige Komponente 40 mittels einer Netzwerknachricht 62 die Nachricht über die Zeitspanne an den vorläufigen dynamischen virtuellen Cloudcontroller 50 senden und parallel dazu eine Anfrage der demzufolge zu ersetzenden Computerressourcen mittels einer Netzwerknachricht 62 an das mobile Cloudnetzwerk 30 übermitteln.

Auf die Anfrage der zu ersetzenden Computerressourcen prüfen die übrigen netzwerkfähigen Komponenten 20, 40 ihre verfügbaren Computerressourcen und übermitteln ihre Angebote an Computerressourcen mittels Netzwerknachrichten 62 an den dynamischen virtuellen Cloudcontroller 50.

Der dynamische virtuelle Cloudcontroller 50 wählt die geeigneten netzwerkfähigen Komponenten 20, 40 des mobilen Cloudnetzwerks 30 aus und konfiguriert diese als Teilnehmer der virtuellen Kommunikations- und Rechenumgebung 60.

In einem dritten Ausführungsbeispiel erfolgt eine Übergabe der Rolle des dynamischen virtuellen Cloudcontrollers, wenn der gegenwärtige dynamische virtuelle Cloudcontroller 50 das Kommunikationsfenster der virtuellen Kommunikations- und Rechenumgebung 60 verlässt.

In diesem Ausführungsbeispiel stellt der vorläufige dynamische virtuelle Cloudcontroller 50 zunächst einmal fest, dass er das Kommunikationsfenster eines bestimmten räumlichen Gebiets, welches die virtuelle Kommunikations- und Rechenumgebung 60 versorgt, verlässt.

In diesem Falle sendet der gegenwärtige dynamische virtuelle Cloudcontroller 50 mittels einer Netzwerknachricht 62 eine Anfrage an alle netzwerkfähigen Komponenten 20, 40 des mobilen Cloudnetzwerks 30 aus, in welcher gefragt wird, ob die jeweilige empfangende netzwerkfähige Komponente 20, 40 die Rolle des dynamischen virtuellen Cloudcontrollers 50 übernehmen kann. Die netzwerkfähigen Komponenten 20, 40 des Cloudnetzwerks 30 senden ihre jeweilige Verfügbarkeit an die virtuelle Kommunikations- und Rechenumgebung 60 zurück. Alternativ kann auch vorab eine geordnete Backup-Liste von dynamischen virtuellen Cloudcontrollern abgestimmt sein.

Der gegenwärtige vorläufige dynamische virtuelle Cloudcontroller 50 ernennt eine netzwerkfähige Komponente 20, 40 der virtuellen Kommunikations- und Rechenumgebung 60 als ihren Nachfolger, also als nachfolgenden dynamischen virtuellen Cloudcontroller.

Der nachfolgende dynamische virtuelle Cloudcontroller richtet nunmehr alle erforderlichen Funktionalitäten eines dynamischen virtuellen Cloudcontrollers 50 ein und beginnt eine permanente Synchronisation aller Konfigurationsparameter der virtuellen Kommunikations- und Rechenumgebung 60 mit dem noch aktiven bisherigen dynamischen virtuellen Cloudcontroller 50. Nachfolgend sendet noch aktive vorläufige dynamische virtuelle Cloudcontroller 50 eine Übergabe-Nachricht an den nachfolgenden dynamischen virtuellen Cloudcontroller und der nachfolgende dynamische virtuelle Cloudcontroller übernimmt die Rolle des vorläufigen dynamischen virtuellen Cloudcontrollers 50 für die virtuelle Kommunikations- und Rechenumgebung 60. In einem weiteren, nicht eigens beschriebenen Ausführungsbeispiel können zusätzlich weitere netzwerkfähige Komponenten 20, 40 in ein räumliches Gebiet hineinbewegt werden, wenn der Bedarf an Rechenressourcen von der mindestens einen mobilen Agrarmaschine 10 innerhalb dieses räumlichen Gebiets das gesamte Angebot an Rechenressourcen innerhalb dieses räumlichen Gebiets übersteigt.

In einem weiteren, nicht eigens dargestellten Ausführungsbeispiel weist die virtuelle Kommunikations- und Rechenumgebung 60 eine weitere Komponente (welche eine einteilige Komponente oder ihrerseits ein Netzwerk sein kann) auf, welche die Nutzung der virtuellen Kommunikations- und Rechenumgebung 60 beobachtet und ortsabhängig und dynamisch einen Preis der Ressource eines oder mehrerer netzwerkfähiger Komponenten 20, 40 abhängig von der Nutzung der virtuellen Kommunikations- und Rechenumgebung 60 in einer Umgebung um den jeweiligen Ort festlegt. Beispielsweise kann eine solche Festlegung eines Preises mittels eines auch durch Maschinen interpretierbaren Smart Contracts erfolgen, der bevorzugt in einer Blockchain realisiert wird.

In einem weiteren, nicht eigens dargestellten Ausführungsbeispiel ist die mobile Agrarmaschine 10 Teil der virtuellen Kommunikations- und Rechenumgebung 60 und der dynamische virtuelle Cloudcontroller 50 ist an der Netzwerksschnittstelle der mobilen Agrarmaschine 10 angeordnet realisiert, sodass der dynamische virtuelle Cloudcontroller während der gesamten Rechenzeit an der Netzwerkschnittstelle der mobilen Agrarmaschine 10 angeordnet bleiben kann. In einem weiteren, nicht eigens dargestellten Ausführungsbeispiel werden die netzwerkfähigen Komponenten jeweils von mehreren Parteien verwaltet und eine Blockchain mit Smart Contracts wird herangezogen, um ein Vertrauensverhältnis zwischen den Parteien zu erreichen und alle Angebote verbindlich, verifizierbar und auditierbar und sämtliche Ressourcennutzungen auditierbar zu halten. In einem weiteren Ausführungsbeispiel wird eine Anwendung in die virtuelle Kommunikations- und Rechenumgebung eingestellt. Dabei wird ein Nutzer vorausgesetzt, welcher eine Anwendung zur Daten-Vorverarbeitung und zur Datenanalyse von Daten der mobilen Agrarmaschine 10 sowie von Daten von bodenbasierten Sensoren und/oder weiteren mobilen Agrarmaschinen 10 einstellen muss.

Der Nutzer legt eine Liste von Anwendungen und ihrer Ressourcen-Erfordernisse fest, d.h. beispielsweise eine Datenbank, welche einen definierten Größe eines Speichers erfordert und einen Nachrichtendienst, welcher Kommunikationsressourcen zur Kommunikation der mobilen Agrarmaschine 10 mit den netzwerkfähigen Komponenten 20, 40 sowie dem dynamischen virtuellen Cloudcontroller 50 sowie ggf. weitere Ressourcen-Erfordernisse aufweist.
Der dynamische virtuelle Cloudcontroller 50 richtet die virtuelle Kommunikations- und Rechenumgebung 60 ein. Nachdem die virtuelle Kommunikations- und Rechenumgebung 60 initialisiert ist wie zuvor im ersten Anwendungsfall beschrieben bildet der dynamische virtuelle Cloudcontroller 50 die angefragten Computerressourcen auf die verfügbaren Computerressourcen anhand der Liste der verfügbaren Computerressourcen ab. Die erfolgreiche Abbildung führt zu einer Ressourcenverwaltung, welche alle Ressourcen, die für die beabsichtigten Anwendungen angefordert werden und welche notwendig sind, um die beabsichtigten Aufgaben zu erfüllen, auflistet.

Der dynamische virtuelle Cloudcontroller 50 stellt in die dynamische Kommunikations- und Rechenumgebung 60 auf die entsprechenden netzwerkfähigen Komponenten eine virtuelle Anwendung, d.h. beispielsweise eine virtuelle Maschine oder einen Container, ein.
Der dynamische virtuelle Cloudcontroller 50 beobachtet die Nutzung der Computerressourcen in der virtuellen Kommunikations- und Rechenumgebung 60 und leitet eine Erhöhung oder eine Verringerung der verfügbaren Computerressourcen abhängig von ihrer Nutzung in der virtuellen Kommunikations- und Rechenumgebung 60 ein.

Der dynamische virtuelle Cloudcontroller 50 verwaltet eine Liste der verfügbaren Computerressourcen und eine entsprechende Aufstellung von verfügbaren und angefragten Computerressourcen wie zuvor beschrieben. Die netzwerkfähigen Komponenten 20, 40 erhalten Einrichtungsanweisungen für Module der virtuellen Kommunikations- und Rechenumgebung 60, beispielsweise zur Einrichtung eines virtuellen Netzwerks und zur Einrichtung eines Namensraums.

Die netzwerkfähigen Komponenten erhalten zudem Anweisungen für erforderliche Authentisierungs-Verfahren und startet die dazu nötigen Kommunikationsvorgänge, beispielsweise den Austausch und die Prüfung von Zertifikaten zur Verschlüsselung und Authentifizierung.

Zudem erhalten die netzwerkfähigen Komponenten 20, 40 Anweisungen zur Prüfung auf Konfigurations-Updates durch den dynamischen virtuellen Cloudcontroller 50.

## Patentansprüche

1. Verfahren zur Bereitstellung von Computerressourcen eines Computernetzwerks (30) an zumindest eine Recheneinrichtung (10), bei welchem zumindest zwei netzwerkfähige Komponenten (20, 40) mit Computerressourcen herangezogen werden, welche relativ zur Recheneinrichtung (10) beweglich sind, wobei
- zumindest ein Bedarfswert der Recheneinrichtung (10) an Computerressourcen erfasst wird,
- zumindest eine Verfügbarkeit der netzwerkfähigen Komponenten (20, 40) ermittelt wird und
- zumindest zwei oder mehrere der netzwerkfähigen Komponenten (20, 40) mit einer ermittelten bestehenden Verfügbarkeit einem Computernetzwerk zugeordnet werden und
- zumindest eine netzwerkfähige Komponente (20, 40) als Administrationsschnittstelle (50) zwischen Computernetzwerk (30) und Recheneinrichtung (10) bereitgestellt wird,
- wobei zumindest der Bedarfswert an Computerressourcen des Computernetzwerts (30) bereitgestellt wird.

2. Verfahren nach Anspruch 1, bei welchem die zumindest zwei oder mehreren netzwerkfähigen Komponenten (20, 40) abhängig von dem Bedarfswert dem Computernetzwerk (30) zugeordnet werden.

3. Verfahren nach einem der vorhergehenden Ansprüche, bei welchem das Computerressourcen der netzwerkfähigen Komponenten (20, 40) des Computernetzwerks (30) bereitstellt werden.

4. Verfahren nach einem der vorhergehenden Ansprüche, bei welchem die Verfügbarkeit der netzwerkfähigen Komponenten (20, 40) ermittelt wird, indem den netzwerkfähigen Komponenten (20, 40) der Bedarfswert der Recheneinrichtung (10) mitgeteilt wird und eine Verfügbarkeit zumindest je einer oder mehrerer der netzwerkfähigen Komponenten (20, 40), vorzugsweise abhängig von einer Bewegung relativ zur Recheneinrichtung (10) und/oder anhand einer Auslastung im Übrigen, erhalten wird, vorzugsweise seitens der zumindest einen Administrationsschnittstelle (50).

5. Verfahren nach einem der vorhergehenden Ansprüche, bei welchem die zumindest eine Recheneinrichtung (10) ein Edge-Device ist.

6. Verfahren nach einem der vorhergehenden Ansprüche, bei welchem die zumindest zwei netzwerkfähigen Komponenten (20, 40) fahrfähig, insbesondere landfahrfähig und/oder luftfahrfähig und/oder seefahrfähig sind.

7. Verfahren nach einem der vorherigen Ansprüche, bei welchem dann, wenn die Verfügbarkeit einer scheidenden netzwerkfähigen Komponente (20, 40) des Computernetzwerks endet, vorzugsweise mittels der zumindest einen Administrationsschnittstelle (50), ein Ende der Verfügbarkeit erfasst wird.

8. Verfahren nach Anspruch 6, bei welchem abhängig vom des Bedarfswerts und/oder von Computerressourcen der scheidenden netzwerkfähigen Komponente (20, 40) die Abnahme von Computerressourcen, vorzugsweise mittels der zumindest einen Administrationsschnittstelle (50), an die übrigen netzwerkfähigen Komponenten ausgeschrieben wird.

9. Verfahren nach einem der vorhergehenden Ansprüche, bei welchem dann, wenn die Verfügbarkeit, insbesondere aufgrund einer Bewegung, zumindest einer der Administrationsschnittstelle (50) zwischen Computernetzwerk (30) und Recheneinrichtung (10) endet, mittels der zumindest einen Administrationsschnittstelle (50) die Bereitstellung als zumindest eine Administrationsschnittstelle (50) an die übrigen netzwerkfähigen Komponenten (20,40) ausgeschrieben wird.

10. Verfahren nach einem der vorhergehenden Ansprüche, bei welchem zumindest eine der netzwerkfähigen Komponenten (20, 40), welche aktuell als zumindest eine Administrationsschnittstelle (50) bereitgestellt wird, nachfolgend nicht weiter als zumindest eine Administrationsschnittstelle (50) bereitgestellt wird.

11. Verfahren nach einem der vorhergehenden Ansprüche, bei welchem ein Bedarfswert der zumindest einen Recheneinrichtung (10) an Computerressourcen wiederholt erfasst wird und abhängig von dem wiederholt erfassten Bedarfswert mindestens eine weitere netzwerkfähige Komponente (20, 40) dem Computernetzwerk (30) zugefügt und/oder eine netzwerkfähige Komponente (20, 40) aus dem Computernetzwerk (30) entfernt wird.

12. Verfahren nach einem der vorhergehenden Ansprüche, bei welchem die Zuordnung von Computerressourcen und/oder der Bedarfswert an Computerressourcen zeitabhängig beobachtet wird und mittels eines Steuerparameters beeinflusst wird, welcher insbesondere mittels eines, vorzugsweise mittels einer Blockchain realisierten, Smart Contracts festgelegt wird.

13. Netzwerkfähige Komponente, welche als Administrationskomponente (50) ausgebildet zur Ausführung eines Verfahrens nach einem der vorhergehenden Ansprüche ist.

14. Computerprogramm welches direkt in einen Speicher einer elektronischen Recheneinrichtung (10) ladbar ist, mit Programm-Mitteln, um die Schritte des Verfahrens nach einem der Ansprüche 1 bis 11auszuführen, wenn das Programm in einer Recheneinrichtung (10) ausgeführt wird.

15. Elektronisch lesbarer Datenträger mit darauf gespeicherten elektronisch lesbaren Steuerinformationen, welche zumindest ein Computerprogramm nach Anspruch 9 umfassen und derart ausgestaltet sind, dass sie bei Verwendung des Datenträgers in einer elektronischen Recheneinrichtung (10) ein Verfahren nach einem der Ansprüche 1 bis 6 durchführen.
